# EUROPEAN PATENT APPLICATION

(11) **EP 2 607 751 A1**
(43) Date of publication of application: **26.06.2013**
(21) Application number: 12197735.9
(22) Date of filing: 18.12.2012
(51) Int. Cl.: F16H 25/22

(54) **Roller screw**

(30) Priority: 22.12.2011 JP 2011282117
(71) Applicant: Hitachi Ltd., Tokyo 100-8280 (JP)
(72) Inventor: Kai, Takamasa, Tokyo, 100-8220 (JP); Hayase, Isao, Tokyo, 100-8220 (JP); Yamada, Hiroyuki, Tokyo, 100-8220 (JP)
(74) Representative: MERH-IP Matias Erny Reichl Hoffmann

(57) **Abstract**

Disclosed is a roller screw including a screw shaft (1) and a nut cage (2) with the screw shaft (1) inserted therein, the roller screw being adapted to convert a rotary motion of either the screw shaft (1) or the cage (2) into a rectilinear or linear motion of the other; the roller screw further including: a plurality of rollers (3), each formed to roll along a flank surface (1a) of the screw shaft; and a plurality of roller bearings (4), each formed to support one of the rollers (3) so as to allow the roller (3) to rotate. At least one of the roller bearings (4) is retained in the case (2) so as to move forward and backward in an axial direction of rotation of the corresponding roller (3) supported by the roller bearing (4).

## Description

### BACKGROUND OF THE INVENTION

### 1. Field of the Invention

The present invention relates to a roller screw including a screw shaft and a nut for supporting a plurality of rollers in contact with the screw shaft.

### 2. Description of the Related Art

Linear actuators use a rotary-linear motion conversion mechanism to convert rotary motion into linear motion, and vice versa. Such linear actuators include roller screws, each of which has a screw shaft and a nut through which the screw shaft is inserted, the nut being for supporting a plurality of rollers so as to allow rotation of each of the rollers in contact with threads provided on the screw shaft. Roller screws can convert a rotary motion of either the screw shaft or the nut into a linear motion of the other.

This type of roller screw includes three main rollers each having a conical surface for rolling along one flank surface on a screw shaft, three bearings (roller support members) each for supporting one of the main rollers so as to allow rotation of the main roller, a nut (roller cage) for supporting the bearings so as to allow oscillation of each of the bearings, three auxiliary rollers each having a cylindrical surface for rolling along the other flank surface on the screw shaft, and three sets of position adjusters (adjusting nuts, locking nuts), each set being used to adjust a position of a rotating shaft of one of the auxiliary rollers, in a radial direction of the screw shaft. W02010/150732 Pamphlet discloses such a roller screw. Male threads are formed on an outer circumference of each adjusting nut, and female threads are formed in each of adjusting nut insertion holes formed in the nut. Changing a position of the adjusting nut in the radial direction of the screw shaft by use of the male threads and the female threads allows the position of the auxiliary roller to be adjusted. After the confirmation of the fact that all rollers have come into contact with one flank surface, while retaining this state, all of the auxiliary rollers are brought into contact with the other flank surface by moving each auxiliary roller towards the screw shaft by use of the adjusting nuts. This allows the nut to be fitted onto the screw shaft without an axial or radial backlash of the screw shaft.

### SUMMARY OF THE INVENTION

The roller screw described in the above document includes three main rollers, but there are limits to the load that the three rollers are able to support. To make the roller screw applicable to higher loading, therefore, a need arises to arrange at least four rollers on the screw. Increasing the number of rollers, however, could render it impossible to distribute the load to all of the rollers, since part of the rollers may or will not come into contact with the screw shaft if, for example, the machining accuracy of the parts constituting the screw shaft is too low. To arrange at least four rollers on the outer circumference of the screw shaft, bring each of the rollers into firm contact with the screw shaft, and distribute the load to all the rollers effectively for appropriate supporting, it is necessary that the positions of each roller be appropriately adjusted with respect to the screw shaft.

The roller screw described in the above document, however, although its auxiliary rollers are position-adjustable, the positions of the main rollers themselves cannot be adjusted. For this reason, if the number of main rollers is increased to four, for example, too significant a machining error of the screw shaft parts could lead to only three of the rollers coming into contact with the screw shaft and the remaining roller not coming into contact.

According to the above document, the adjusting nuts and the locking nuts are provided as the position adjusters for the auxiliary rollers, to adjust the positions of each auxiliary roller, in the radial direction of its screw shaft, that is obliquely retained by a rotating shaft so that the cylindrical surface of the auxiliary roller comes into contact with the other flank surface. If this configuration is diverted to the position adjustment of the main rollers, this will significantly increase the number of parts. In addition, since the main rollers are larger-sized than the auxiliary rollers, the adjusting nuts and locking nuts for the main rollers will require accommodation in the cage and this accommodation will in turn entail upsizing the cage in the radial direction of the screw shaft.

An object of the present invention is to provide a roller screw whose roller positions can be adjusted.

In order to attain the above object, a roller screw according to an aspect of the present invention includes a screw shaft and a cage with the screw shaft inserted therein, and converts a rotary motion of either the screw shaft or the cage into a rectilinear or linear motion of the other. The roller screw further includes rollers, each formed to roll along a flank surface of the screw shaft, and roller bearings, each formed to support one of the rollers so as to allow rotation of the roller, each of the roller bearings being retained in the case so as to move forward and backward in an axial direction of rotation of the corresponding roller.

In accordance with the present invention, positions of the rollers with respect to the screw shaft can be adjusted, which in turn allows a load to be distributed to all rollers by bringing each of them into contact with the screw shaft.

### BRIEF DESCRIPTION OF THE DRAWINGS

Other objects and advantages of the invention will become apparent from the following description of embodiments with reference to the accompanying drawings in which:
Fig. 1 is a side view of a roller screw according to a first embodiment of the present invention;
Fig. 2 is a front view of the roller screw according to the first embodiment of the present invention, showing the screw as viewed from the right of Fig. 1;
Fig. 3 is a cross-sectional view of the roller screw according to the first embodiment of the present invention, showing the screw as cut along plane A-A in Fig. 2;
Fig. 4 is an enlarged view of a roller 3 and roller bearing 4 in the first embodiment of the present invention;
Fig. 5 is a perspective view of rotating tools according to an embodiment of the present invention; and
Fig. 6 is a cross-sectional view of a roller screw according to a second embodiment of the present invention.

### DESCRIPTION OF THE PREFERRED EMBODIMENTS

Hereunder, embodiments of the present invention will be described using the accompanying drawings. In each drawing, the same elements will each be assigned the same reference number and description of these elements will be herein omitted as appropriate.

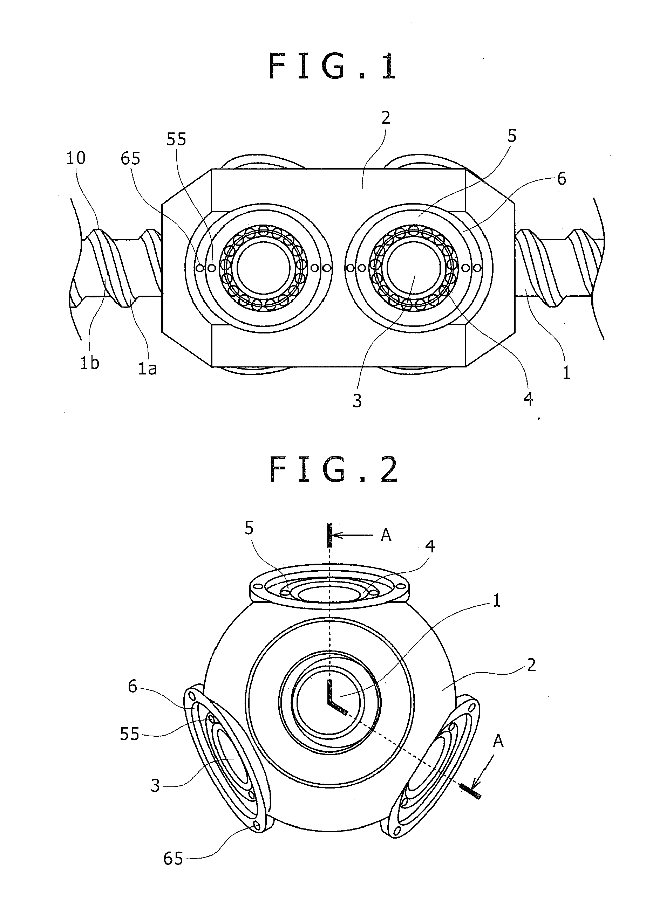

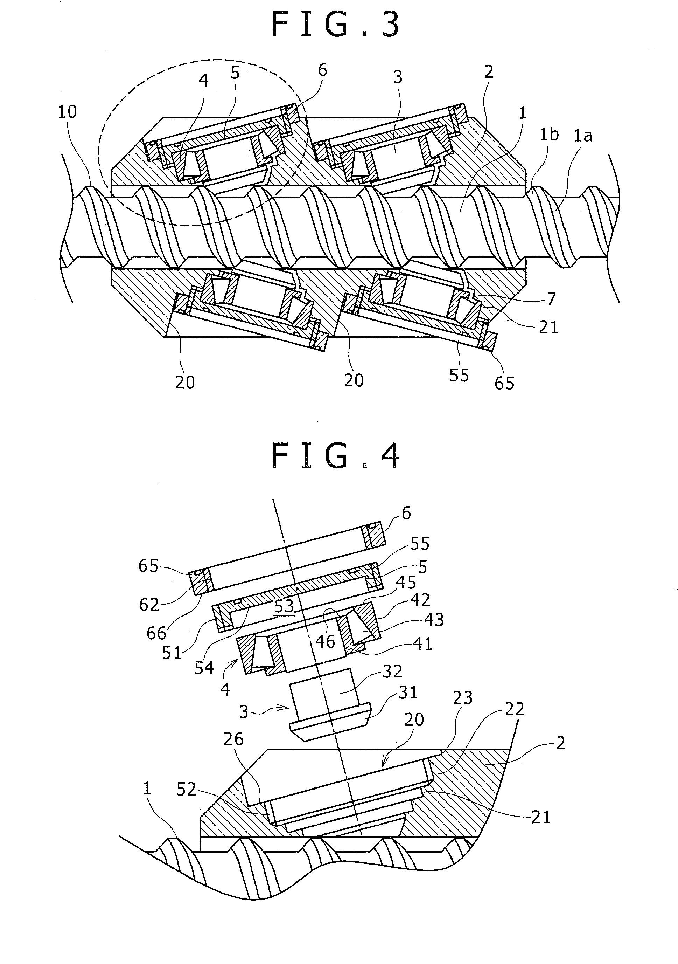

Fig. 1 is a side view of a roller screw according to a first embodiment of the present invention, Fig. 2 is a front view of the roller screw according to the first embodiment of the present invention, showing the screw as viewed from the right of Fig. 1, and Fig. 3 is a cross-sectional view of the roller screw as cut along plane A-A in Fig. 2.

The roller screw shown in the figures includes a screw shaft 1, rollers 3 each formed to roll along one flank surface 1a on the screw shaft 1, roller bearings 4 each for supporting one of the rollers 3 so as to allow rotation of the roller 3, and a nut cage 2 having a hollow section through which the screw shaft 1 is inserted, the nut cage being formed to support the roller bearings 4. Rotating one of the screw shaft 1 and the nut cage 2 actuates the other in a rectilinear or linear fashion.

Spirally formed threads 10 (spiral grooves) are provided on an outer circumference of the screw shaft 1. The threads 10 (spiral grooves) are each formed with two flank surfaces, 1a and 1b, that are inclined in different directions. Hereinafter, as appropriate, the flank surface located to the right of each thread 10 in Fig. 1 is defined as the right flank surface 1a, and the flank surface at left, as the left flank surface 1b.

The roller screw shown in Fig. 1 includes three rollers 3 and roller bearings 4 (first roller group) arranged at an equal spacing along one lead of spiral grooving on the screw shaft 1. The roller screw also includes three more rollers 3 and roller bearings 4 (second roller group) arranged similarly to the above, via a spacing in an axial direction of the screw shaft 1 from the three rollers 3 and roller bearings 4. The six rollers 3 are all in contact with the right flank surface 1a. The three rollers in each roller group are each arranged in 2n/3[rad] offset form. While a roller screw with six rollers 3 and roller bearings 4 in all is hereinafter described in detail below as an example, the number of rollers and roller bearings 4 is not limited to six. In terms of improvement in high load resistance, the number of the rollers 3 included in the roller screw is preferably at least four.

Fig. 4 is an enlarged view of a roller 3 and roller bearing 4 (hatched region) in the first embodiment of the present invention, with constituent parts of the roller 3 and roller bearing 4 being shown in exploded form in an axial direction of the roller 3. As shown in Fig. 4, the roller 3 includes a rolling section 31 and a shank 32.

The rolling section 31 has a conical surface equivalent to an object left by removing an apex section from a cone diametrally diminished towards the screw shaft 1, and the rolling section 31 comes into contact with the flank surface 1a via the conical surface. The roller 3 is retained with its revolving axis (rotational axis) inclined so that the rolling section 31 with the conical surface, and the right flank surface 1a come into substantially parallel and linear contact. Bringing the rolling section 31 and the right flank surface 1a into linear contact in this manner leads to reducing a hertzian stress and hence to improving durability against flaking. Rotating the screw shaft 1 or the nut cage 2 makes the roller 3 roll along the right flank surface 1a of the screw shaft 1 via the rolling section 31.

The shank 32 is a section supported by the roller bearing 4, protruding from a bottom side of the rolling section 31 and formed into a cylindrical shape having a central axis (rotational axis) common to that of the rolling section 31. An inner ring 41 (described later herein) of the roller bearing 4 is fitted around an outer surface of the shank 32, and the roller 3 is rotatably supported in the roller bearing 4 via the shank 32.

In addition, as is evident from Fig. 4 and others, a diameter of that end portion of the rolling section 31 which faces the screw shaft 1, in the present embodiment, is set to be greater than a pitch (center-to-center clearance between adjacent threads) of the screw shaft 1. This large diameter of the rolling section 31 reduces the Hertzian stress that occurs between the rolling section 31 and the right flank surface 1a.

The roller bearing 4 supports the roller 3 so as to make the roller 3 rotatable, and is accommodated in a bearing support 21 (described later herein) of the nut cage 2. That is to say, the roller 3 forms a turning pair with the nut cage 2. The roller bearing 4 shown in the figure is a conical roller bearing, which in addition to the inner ring 41 fitted around the shank 32 of the roller 3, includes a substantially cylindrical outer ring 42 disposed on an outer circumferential side of the inner ring 41, with a plurality of conical rollers 43 arranged annularly between the inner ring 41 and the outer ring 42. Axial and radial directions of the roller bearing 4 are in alignment with an axial direction of rotation, and a radial direction, of the roller 3 supported by the roller bearing 3. Additionally, an outer end face 45 of the outer ring 42, in a radial direction of the screw shaft 1, is placed at a more outward position in the radial direction of the screw shaft 1 than an outer end face 46 of the inner ring 41, in the radial direction of the screw shaft 1. This positioning brings the roller bearing 4 into contact with a position-adjusting nut 5 via the end face 45 of the outer ring 42. This contact is described later herein. A conical roller bearing is formed so that an axial load and radial load acting from the roller 3 can be received with one bearing. The conical roller is used as the roller bearing 4 in the example of Fig. 4, but any other kind of bearing may be used instead.

The position-adjusting nut 5 is a member used to adjust a position of the roller bearing 4 in the axial direction of rotation of the roller 3, and includes a substantially cylindrical, outer circumferential surface having a diameter larger than that of the roller bearing 4. A male-threaded section 51 is provided on the outer circumferential surface. The male-threaded section 51 is threadably engaged with a female-threaded section 52 of a position-adjusting nut support 22 and a female-threaded section 62 of a locking nut 6, in the nut cage 2. The position-adjusting nut 5 also has a recess 53 to accommodate the outer ring 42 of the roller bearing 4, and the end face 45 of the outer ring 42 of the roller bearing 4 abuts upon a lower surface 54 of the nut, at the recess 53.

Upon an upper surface (outer end face in the radial direction of the screw shaft 1) of the position-adjusting nut 5, two pin insertion holes 55 are provided across a central axis of the nut 5. Pins 8b on a rotating tool 8a (described later) are inserted into the pin insertion holes 55.

The locking nut 6, used to fix the position-adjusting nut 5 to the nut cage 2, is a substantially annular member having a larger diameter than the position-adjusting nut 5. The female-threaded section 62 of the locking nut 6 is provided on an inner circumferential surface thereof. The female-threaded section 62 is threadably engaged with the male-threaded section 51 of the position-adjusting nut 5. Upon an upper surface (outer end face in the radial direction of the screw shaft 1) of the locking nut 6, two pin insertion holes 65 are provided across a central axis of the nut 6. Pins 8d on a rotating tool 8c (described later) are inserted into the pin insertion holes 65.

The nut cage 2 is a substantially cylindrical member having a hollow section inside it for the insertion of the screw shaft 1. In the nut cage 2, holes 20 as many as the number of the rollers 3 (roller bearings 4) are formed to accommodate the roller bearings 4. The holes 20 each include a bearing support 21, a position-adjusting nut support 22, and a locking nut support 23. The nut cage 2 is basically in non-contact with the screw shaft 1, and is in contact therewith only via the rolling section 31 of the roller 3 supported by the roller bearing 4.

The bearing support 21 is a section for accommodating the outer ring 42 of the roller bearing 4, and is formed into a substantially cylindrical shape to make the outer ring 42 abut at its outer circumferential surface upon the particular section. An end face of the bearing support 21 that is directed towards the screw shaft 1 is preferably positioned as close as possible to the screw shaft 1 to prevent, before the roller 3 touches the flank surface 1a, the end face and the roller bearing 4 from coming into contact with each other and hindering the position adjustment of the roller 3. In other words, when the roller bearing 4 is accommodated in the bearing support 21 (nut cage 2), a clearance 7 (see Fig. 3) is preferably formed on a section of the roller bearing 4 that faces the screw shaft 1. The illustrated example shows a configuration in which the end face is provided on a section of the bearing support 21 that faces the screw shaft 1. In a perspective of forming the clearance 7 on the section of the roller bearing 4 that faces the screw shaft 1, however, the end face may instead be omitted from the screw configuration, that is, the cylindrical surface of the bearing support 21 may be extended to the hollow section of the nut cage 2.

The position-adjusting nut support 22 is a member for accommodating the position-adjusting nut 5, and this member is adjacent to the bearing support 21, on the radial outside of the screw shaft 1. The position-adjusting nut support 22 is formed with an inside diameter greater than that of the bearing support 21. The position-adjusting nut support 22 is also formed into a substantially cylindrical shape to match an outer circumferential surface of the position-adjusting nut 5, and the female-threaded section 52 for threadable engagement with the male-threaded section 51 of the position-adjusting nut 5 is formed on an inner circumferential surface of the nut support 22. Engaging the male-threaded section 51 and the female-threaded section 52 causes the roller bearing 4 to be retained in the nut cage 2 so as to be movable forward and backward in the axial direction of rotation of the roller 3.

The female-threaded section 52 is preferably provided to be deep enough to make the position of the roller bearing 4 readily adjustable in the axial direction thereof. That is because too shallow positioning of the female-threaded section 52 is likely to bring the end face of the roller bearing 4 into contact with the nut cage 2, making no further position adjustment possible.

The locking nut support 23 is a member for accommodating the locking nut 6, and this member is adjacent to the position-adjusting nut support 22, on the outside in the radial direction of the screw shaft 1. The locking nut support 23 is formed with an inside diameter greater than that of the position-adjusting nut support 22. The locking nut support 23 is also formed into a substantially cylindrical shape to match an outer circumferential surface of the locking nut 6. In addition, an end face 26 of the locking nut support 23 that is directed towards the screw shaft 1 is formed into a substantially planar shape to abut upon an end face 66 of the locking nut 6 that is directed towards the screw shaft 1. A clearance may be provided between an inner circumferential surface of the locking nut support 23 and the outer circumferential surface of the locking nut 6.

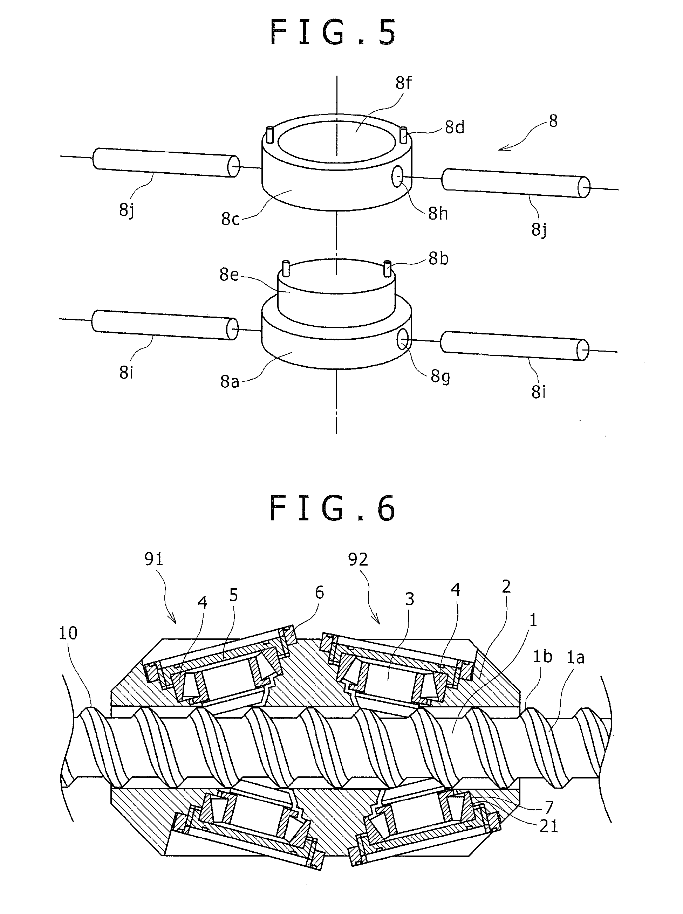

Next, rotating tools for rotating the position-adjusting nut 5 and the locking nut 6 are described below. Fig. 5 is a perspective view of the rotating tools according to an embodiment of the present invention.

Referring to Fig. 5, the rotating tool 8a is for rotating the position-adjusting nut 5, and the rotating tool 8c is for rotating the locking nut 6. The rotating tool 8a includes pins 8b, which are for insertion into the pin insertion holes 55 in the position-adjusting nut 5, and two insertion holes 8g provided in a substantially horizontal direction. A bar-shaped member 8i that serves as a handle during rotation of the position-adjusting nut 5 is inserted into each of the insertion holes 8g. The rotating tool 8c includes pins 8d, which are for insertion into the pin insertion holes 65 in the locking nut 6, and two insertion holes 8h provided in a substantially horizontal direction. A bar-shaped member 8j that serves as a handle during rotation of the locking nut 6 is inserted into each of the insertion holes 8h.

The rotating tool 8a shown in Fig. 5 is constructed in such a shape as having two axially coupled columns of different diameters, and the rotating tool 8c is constructed in an annular shape having a hole 8f in the tool. The hole 8f of the rotating tool 8c has a diameter set to be such that the smaller-diameter column 8e of the two columns of the rotating tool 8a can be inserted. Thus, rotation of the locking nut 6 by means of the rotating tool 8c, and that of the position-adjusting nut 5 by means of the rotating tool 8a can each be conducted independently. This in turn allows the column 8e of the rotating tool 8a to be inserted into the hole 8f of the rotating tool 8c and then while the position-adjusting nut 5 is being locked using the rotating tool 8a so as not to turn, the locking nut 6 to be tightened using the rotating tool 8c. The position-adjusting nut 5 can therefore be double-nut fastened with the nut cage 2 and the locking nut 6.

The pins 8b of the rotating tool 8a are provided on a lower surface of the column 8e, and the insertion holes 8g on a side face of the column larger in diameter. The pins 8d of the rotating tool 8c are provided on an end face of its annular member, and the insertion holes 8h on a side face of the annular member.

A way to rotate the position-adjusting nut 5 and locking nut 6 using the rotating tools of the above configurations is described below. First, the pins 8b of the rotating tool 8a are inserted into the pin insertion holes 55 of the position-adjusting nut 5 and then this nut is rotated via the bar-shaped members 8i. Next after positioning of the position-adjusting nut 5, the pins 8d of the rotating tool 8c are inserted into the pin insertion holes 65 of the locking nut 6 to fix this nut, and then the locking nut 6 is tightened by rotation via the bar-shaped members 8j. At this time, to achieve the double-nut fastening of the position-adjusting nut 5 for its secure locking, the bar-shaped members 8i are preferably held down to prevent the position-adjusting nut 5 from turning and loosening.

The above rotating method has only been described by way of example; any other appropriate method may be used as an alternative.

Next, position adjustment of the rollers 3 in the roller screw of the above configuration is described below. When the position of a roller 3 is adjusted, the male-threaded section 51 of the position-adjusting nut 5 is threaded into the female-threaded section 52 of the position-adjusting nut support 22 using the rotating tool 8a. The lower surface 54 of the position-adjusting nut 5 then pushes the end face 45 of the roller bearing 4, and this action allows the roller bearing 4 and the roller 3 supported by this bearing 4, to be moved together as an integrated unit in an axial direction of rotation of the roller 3 (i.e., the position of the roller bearing 4 in the axial direction of rotation of the roller 3 is adjusted according to a particular amount of threading of the position-adjusting nut 5). This brings the roller 3 into close proximity to the screw shaft 1, the roller 3 finally coming into contact with the flank surface 1a via the rolling section 31. In this way, the roller 3 can be easily brought into contact with the screw shaft 1 (the right flank surface 1a) by movement in the axial direction of rotation of the roller 3, and this is because the rolling section 31 of the roller 3 has a conical shape. Since the rolling section 31 of this conical shape inclines with respect to the moving direction of the roller 3 (the axial direction of rotation of the roller 3), the roller 3 and the flank surface 1a can be in contact with each other by moving the rolling section 31 towards the screw shaft 1. In the present embodiment, therefore, the position adjustment of the roller bearing 4 with respect to the screw shaft 1 and the position adjustment of the roller 3, associated with the former position adjustment, are implemented, which allows load distribution by bringing all rollers 3 of the roller screw into a flank surface of the screw shaft 1.

When four or more rollers are arranged on the screw shaft 1 as in the present embodiment, only the positions of rollers likely not to come into effective contact with the screw shaft 1 may be adjusted. In other words, of the four or more rollers, three rollers effectively come into contact with the screw shaft 1 and only the remaining roller(s), except for the three rollers, may be constructed to be position-adjustable. In this case, the roller bearings 4 involved with the three rollers which serve as standard rollers do not require position adjustment. Accordingly, the roller bearings 4 involved with the three rollers may be constructed so as not to be movable forward or backward in the axial direction of rotation of each roller 3. Instead, each roller bearing 4 may be constructed so as to be directly fixed to, for example, the nut cage 2, without the clearance 7, the male-threaded section 51, and the female-threaded sections 52, 62 being provided. This construction is not limited to a case in which only the rollers 3 in contact with one flank surface 1a constitute the roller screw, and can likely be applied to a case in which any rollers 3 to come into contact with the other flank surface 1b are included in the roller screw (i.e., a case of a second embodiment described later herein). Irrespective of the flank surface with which the rollers come into contact, if a total number of the rollers is at least three, the above construction can be adopted. In addition, it goes without saying that position adjustment of all rollers can be implemented by, for example, providing the male-threaded section 51 on all roller bearings 4.

The female-threaded section 52 of a sufficient depth at the bearing support 21, and the clearance 7 of a sufficient depth at the side of the bearing support 21 that faces the screw shaft 1 are provided in the nut cage 2 according to the present embodiment. As shown in Fig. 3, therefore, even when the roller 3 is pushed downward by the position-adjusting nut 5 and brought into contact with the flank surface 1a, a vertical clearance remains below the outer ring 42 of the roller bearing 4 and the position-adjusting nut 5, this preventing the roller bearing 4 and the position-adjusting nut 5 from coming into contact with the nut cage before the roller 3 comes into contact with the flank surface 1a.

In addition, the present embodiment uses the locking nut 6 to prevent the position-adjusting nut 5 from loosening. When the locking nut 6 is threaded into the male-threaded section 51 of the position-adjusting nut 5, the end face 66 of the nut that is oriented towards the screw shaft 1 abuts upon the end face 26 of the nut cage 2. The locking nut 6 then functions as a double nut, fixing the position-adjusting nut 5 to the nut cage 2. It is noted that the locking nut 6 may be omitted.

Furthermore, the present embodiment employs a configuration in which the bearing support 21 with a geometry matching an outside diameter of the outer ring 42 is provided in the nut cage 2 so that the inner circumferential surface of the bearing support 21 and the outer circumferential surface of the outer ring 42 abut each other. The thus-disposed bearing support 21, although it allows the roller bearing 4 to be moved in an axial direction (the axial direction of rotation of the roller 3), can regulate movement of the roller bearing 4 in a radial direction (the radial direction of the roller 3) (this means that the roller bearing 4 is retained so as not to be movable in its radial direction). The nut cage 2 in the present embodiment suppresses the radial movement of the roller bearing 4, thereby stably supporting the roller bearing 4. Since the bearing support 21 is a cylindrical surface without an element, such as a female-threaded section, that easily causes a radial clearance, the bearing support 21 is a further preferable member for fixing a radial position of the roller bearing 4.

In the above embodiment, the bearing support 21 has constrained the radial movement of the roller bearing 4 and the position-adjusting nut 5 has retained the roller bearing 4 in such a form as to make this bearing movable forward and backward in the radial direction. In a perspective similar to this, however, a side of the outer ring 42 that faces the screw shaft 1, at the outer circumferential surface of the outer ring 42, may be formed as a cylindrical surface, and a male-threaded section 51 may be provided at a more radially outside position on the outer circumferential surface of the screw shaft 1 than the cylindrical surface. In addition, a side of the bearing support 21 that faces the screw shaft 1, at the inner circumferential surface of the bearing support 21, may be formed as a cylindrical surface, and a female-threaded section 52 may be provided at another, more radially outside position on the outer circumferential surface of the screw shaft 1 than the cylindrical surface. In such a configuration, when the cylindrical surface at the outer circumferential surface of the outer ring 42 and the cylindrical surface at the inner circumferential surface of the bearing support 21 are brought into contact, the radial movement of the roller bearing 4 is constrained, and the male-threaded section 51 at the outer circumferential surface of the outer ring 42 and the female-threaded section 52 at the inner circumferential surface of the bearing support 21 retain the roller bearing 4 in such a form as to make this bearing movable forward and backward in the axial direction. In this case, the position-adjusting nut 5 can be omitted and thus the number of parts required can be reduced.

The following describes a second embodiment of the present invention. Fig. 6 is a cross-sectional view of a roller screw according to the second embodiment of the present invention. This figure shows the roller screw existing when cut along the same section as in Fig. 3, and the same elements as in the previous drawings are each assigned the same reference number, description of these elements being herein omitted as appropriate.

The roller screw shown in Fig. 6 includes a first roller group 91, which includes three rollers 3 each formed to roll while in contact with a right flank surface 1a of a screw shaft 1, and a second roller group 92, which includes three rollers 3 each formed to roll while in contact with a left flank surface of the screw shaft 1. As in the first embodiment, the three rollers in each of the roller groups 91, 92 are arranged at an equal spacing of 2n/3 [rad] around the screw shaft 1. The first roller group 91 and the second roller group 92 are arranged via a spacing in an axial direction of the screw shaft 1. The first roller group 91 is formed so as to support a load applied from an axial left side of the screw shaft 1, and the second roller group 92 is formed so as to support a load applied from an axial right side of the screw shaft 1. Briefly, the roller screw according to the present embodiment is formed so as to support bidirectional loads.

Even when the rollers 3 are thus arranged, if roller bearings 4 are retained in a nut cage 2 so as to be movable forward and backward in an axial direction of rotation of the rollers 3 in substantially the same configuration as that of the first embodiment, positions of each roller 3 with respect to the screw shaft 1 can be adjusted and load distribution is therefore possible by bringing all rollers 3 included in the roller screw, into contact with a flank surface of the screw shaft 1.

Since the number of rollers included in each roller group 91, 92 according to the present embodiment is three, if, while the three roller bearings 4 in one roller group are being retained so as to be movable forward and backward in an axial direction of the roller bearings, the three roller bearings 4 in the other roller group are retained so as not to be movable forward and backward in an axial direction of these roller bearings, then all rollers 3 are brought into contact with the screw shaft 1. In other words, in this case, it suffices just to adjust positions of the roller bearings 4 belonging to one of the two roller groups. In addition, irrespective of the flank surface with which the rollers 3 come into contact, the roller bearings 4 involved with three of the six rollers may be retained so as to be movable forward and backward in the axial direction of each roller bearing 4, and the roller bearings 4 involved with the remaining three rollers, except for the above three rollers, may be retained so as not to be movable forward and backward in the axial direction of each roller bearing 4.

Examples in which the number of rollers included in one roller group is the same between the two roller groups have been described in the above embodiments. This number may however be made different.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A roller screw comprising:
a screw shaft (1) and a cage (2) with the screw shaft (1) inserted therein, the roller screw being adapted to convert a rotary motion of either the screw shaft (1) or the cage (2) into a rectilinear or linear motion of the other;
rollers (3), each formed to roll along one of flank surfaces (1a, 1b) of the screw shaft (1); and
roller bearings (4), each formed to support one of the rollers (3) so as to allow the roller (3) to rotate, each of the roller bearings (4) being retained in the case so as to move forward and backward in an axial direction of rotation of the corresponding roller (3).

2. The roller screw according to claim 1, wherein:
the roller (3) includes a conical surface diametrally diminished towards the screw shaft (1), and comes into contact with the flank surface (1a, 1b) via the conical surface.

3. The roller screw according to claim 1 or 2, wherein:
the roller (3) is provided in one of at least four different positions;
at least one of the roller bearings (4) supports at least one roller (3) remaining after three rollers (3) are excluded from at least the four rollers (3), and is retained in the cage (2) so as to move forward and backward in the axial direction of rotation of the roller (3); and
three more roller bearings (4) each support one of the three rollers (3), and are each retained in the cage (2) so as to be prevented from moving in the axial direction of rotation of the roller (3).

4. The roller screw according to claim 3, wherein:
the other three roller bearings (4) each support a roller (3) that comes into contact with one flank surface (1a, 1b) on the screw shaft (1); and
at least one of the roller bearings (4) supports a roller (3) that comes into contact with the other flank surface (1a, 1b) on the screw shaft (1).

5. The roller screw according to any of claims 1 to 4, wherein:
the cage (2) further includes a clearance formed on a side of the roller bearings (4) that faces the screw shaft (1).

6. The roller screw according to any of claims 1 to 5, wherein:
the cage (2) supports each of the roller bearings (4) so as to prevent the roller bearing (4) from moving in a radial direction thereof.

7. The roller screw according to at least one of claims 1 to 6, wherein:
the cage (2) includes holes each for retaining one of the roller bearings (4) so as to prevent the roller bearing (4) from moving in the radial direction thereof; and
the roller bearing (4) has its outer ring (42) fitted into one of the holes.

8. The roller screw according to any of claims 1 to 7, further comprising:
a male-threaded section (51) provided an outer circumference of each of the roller bearings(4);
holes, each provided in the cage (2), for accommodating one of the roller bearings (4); and
a female-threaded section (52, 62), provided on an inner circumferential surface of each of the holes, for threadable engagement of the male-threaded section (51).
